# NEUE EUROPÄISCHE PATENTSCHRIFT

(11) **EP 0 825 968 B2**
(45) Veröffentlichungstag und Bekanntmachung des Hinweises auf die Entscheidung über den Einspruch: **28.06.2006**
(45) Hinweis auf die Patenterteilung: 08.09.1999
(21) Anmeldenummer: 96915018.4
(22) Anmeldetag: 04.05.1996
(51) Int. Cl.: C04B 35/03, C04B 35/66

(54) **VERWENDUNG EINER WASSERHALTIGEN, FEUERFESTEN KERAMISCHEN GIESSMASSE**
USE OF A WATER-CONTAINING FIRE-RESISTANT CERAMIC CASTING MATERIAL
APPLICATION D'UNE MATIERE COULABLE CERAMIQUE REFRACTAIRE CONTENANT DE L'EAU

(30) Priorität: 19.05.1995 DE 19518468
(43) Veröffentlichungstag der Anmeldung: 04.03.1998
(73) Patentinhaber: Veitsch-Radex GmbH & Co, 1100 Wien (AT)
(72) Erfinder: ECKSTEIN, Wilfried, A-8793 Trofaiach (AT)
(74) Vertreter: Becker, Thomas
(86) Internationale Anmeldenummer: PCT/EP1996/001865
(87) Internationale Veröffentlichungsnummer: WO 1996/036578

(56) Entgegenhaltungen:
- EP-A- 0 472 350
- EP-A- 0 630 359
- WO-A-93/17979
- DE-A1- 4 226 211
- DE-C2- 3 718 482
- US-A- 4 061 501
- US-A- 4 307 197
- US-A- 5 104 833
- PATENT ABSTRACTS OF JAPAN vol. 95, no. 001 & JP,A,07 017773 (KUROSAKI REFRACT CO LTD), 20.Januar 1995,

## Beschreibung

Die Erfindung betrifft die Verwendung einer wasserhaltigen, feuerfesten keramischen Gießmasse auf Basis eines hydratationsempfindlichen Metalloxids, wie MgO, insbesondere in Form von Sintermagnesia.

Magnesiakohlenstoffsteine (MgO-C-Steine) haben sich als Feuerfestauskleidung in Aggregaten der Stanlerzeugung seit langem bewährt. Diese Steine bestehen hauptsächlich aus Magnesia (MgO), insbesondere in Form von Sinter- oder Schrnelzmagnesia und Kohlenstoff. Sie werden ungebrannt bei Anwendungstemperaturen bis 1800° C eingesetzt. Ihre herausragenden Eigenschaften sind ein ausgezeichnetes Temperatur-Wechselverhalten, ein hervorragendes Wärmeleitvermögen und insbesondere eine gute Resistenz gegenüber aggressiven Schlacken. Das dafür notwendige kompakte Gefüge aus Magnesit und Kohlenstoff wird wesentlich durch das verwendete Bindemittel mitbestimmt.

In der DE 42 07 249 C1 wird ein Verfahren zur Herstellung von MgO-C-Steinen beschrieben, wobei als Bindemittel eine aliphatische, organische Polymerverbindung eingesetzt wird. Ein solches Bindemittel ist dadurch charakterisiert, daß sich der organische Teil rückstandsfrei und ohne Schadstoffemissionen bei höheren Temperaturen zersetzt. Es verbleiben allenfalls nichtschädliche, anorganische Reste.

Derartige Steine finden, wie sich unter anderem "Veltsch-Radex Rundschau", Heft 1-2/1994, 494 entnehmen läßt, in der Schlackenzone von Gießpfannen Anwendung. Während die Pfannenzustellung im übrigen monolithisch erfolgt, wurde im Bereich der Schlackenzone auf die genannten MgO-C-Steine zurückgegriffen, um die Haltbarkeit der Feuerfestauskleidung in diesem, durch die aggressiven metallurgischen Schlacken besonders gefährdeten Bereich gegenüber den monolithisch zugestellten Abschnitten auf etwa das gleiche Niveau zu bringen. Aufgabe der Erfindung ist es, eine Möglichkeit aufzuzeigen, mit der auch erosionsgefährdete Wandzonen, insbesondere der Schlackenbereich, mit einer feuerfesten Gießmasse monolithisch ausgekleidet werden kann.

Der Einsatz von Massen mit der in der DE 42 07 249 C1 offenbarten Rezeptur scheidet dabei aus, weil die magnesitische Komponente stark hydratationsempfindlich ist und bei Zugabe von Wasser, wie dies bei einer Gießmasse zwingend notwendig ist, zu einer Hydratation der Magnesia (MgO) führen würde. Hierin liegt auch der Grund, warum gemäß "Veitsch-Radex Rundschau"D (a.a.O.) trocken hergestellte MgO-C-Steine im Schlackenzonenbereich eingesetzt werden.

Mit der vorliegenden Erfindung ist es gelungen, eine wasserhaltige, feuerfeste keramische Gießmasse auf Basis eines hydratationsempfindlichen Metalloxios, wie MgO, mit einem Kohlenstoffgehalt zwischen 3 und 10 Gew.-% zu schaffen, bei der - trotz ihres Wassergehaltes - eine Hydratation des MgO verhindert wird.

Dabei beruht die Erfindung auf der Erkenntnis, daß hierzu zwei weitere Maßnahmen notwendig sind. Zum einen bedarf die Kohlenstoffkomponente einer ausreichenden Dispergierung innerhalb der Gießmasse. Dies wird erreicht durch Zugabe eines Dispergiermittels in einer Menge zwischen 0,1 und 2,0 Gew.-%, bezogen auf den Feststoffanteil der Masse.

Durch diese Maßnahme entfällt die im Stand der Technik nach der DE 43 17 383 A1 zwingend vorgeschriebene Hydrophilisierungsbehandlung des Kohlenstoffs.

Darüber hinaus umfaßt die Gießmasse einen Anteil zwischen 1,0 und 10,0 Gew.-%, wiederum bezogen auf den Festoffanteil der Masse, an einer reaktiven Kieselsäure. Die Kieselsäure, die beispielsweise in Form von Mikrosilika zugegeben werden kann, ist maßgeblich dafür verantwortlich, daß eine Hydratation der Sintermagnesia verhindert wird.

Danach betrifft die Erfindung in ihrer allgemeinsten Ausführungsform die Verwendung einer wasserhaltigen, feuerfesten keramischen Gießmasse gemäß Anspruch 1

Die beschriebene Gießmasse kann -wie dies in "Veitsch-Radex Rundschau" (a.a.0.) am Beispiel hochtonerdehaltiger Gießmassen beschrieben wird, durch Einvibrieren hinter einer entsprechenden Schablone zugestellt werden. Dabei kann die Feuerfestauskleidung des metallurgischen Schmelzgefäßes entweder ganz oder teilweise mit der beschriebenen Gießmasse erfolgen. Die getrennte Zustellung des Schlackenbereiches mit MgO-C-Steinen kann dem-nach durch eine monolithische Zustellung ersetzt werden. Hieraus ergeben sich ersichtlich Vorteile in der Zustelltechnik. Die beschriebene monolithische Gießmasse erreicht dabei annähernd die Haltbarkeiten, die auch mit den genannten MgO-C-Steinen erreicht werden.

Es ist also nicht mehr notwendig, auf geformte Magnesia-Kohlenstoff-Produkte, die nach der Preßtechnologie unter Anwendung hoher Drucke aus trockenen Rohstoffen hergestellt werden, zurückzugreifen. Lediglich durch Vibration (oder Stampfen) werden vielmehr ähnlich hohe Raumgewichte wie bei den genannten geformten Produkten erreicht. Auch die mittels monolithischer Zustelltechnik erreichbaren Porositäten liegen mit beispielsweise 10 bis 12% außerordentlich niedrig.

Im Niedrigtemperaturbereich (bis etwa 300° C) trägt der dispergierte Kohlenstoff maßgeblich zur Standsicherheit der Masse bei. Bei höheren Temperaturen (oberhalb 700° C) erfolgt eine durchgehende keramische Bindung der Masse, die wesentlich durch den Anteil an reaktiver Kieselsäure unterstützt wird.

Der Kohlenstoff bedarf keiner gesonderten Aufbereitung, muß also nicht mit einer hydrophilen Beschichtung ausgebildet werden, wie beispielsweise in der DE 43 17 383 A1 noch vorgeschlagen wird.

Ebenso entfällt eine Beschichtung (Hydrophobierung) der MgO-Komponente gegen Hydratation.

Der Kohlenstoffträger wird beispielsweise in Form von Ruß und/oder Graphit eingebracht. Der Kohlenstoffträger sollte dabei eine Teilchengröße zwischen 1,0 und 500 µm (bevorzugt 10 - 300 µm) aufweisen. In Anwesenheit des Anmachwassers (3 bis 7 Gew.-%, bezogen auf den Feststoffanteil der Masse) führt das Dispergiermittel zu einer Aufspaltung etwaiger Kohlenstoffagglomerate und damit zu einer hornogenen, feinteiligen Aufbereitung des Kohlenstoffträgers innerhalb der Gießmasse. Unter der Annahme der vorstehend genannten Massenantaile in der genannten Auswahl wird ein Anmachwassergehalt von ca. 6 Gew.-% (5 bis 7 Gew.-%) in der Regel ausreichen.

Auf die separate Zugabe eines Bindemittels, insbesondere eines Zementes, kann bei der beschriebenen Masse vollständig verzichtet werden. Dagegen können weitere Zusätze wie calcinierte Tonerde, Siliciumcarbid, Metalle, insbesondere Si, aber auch Fremdoxide wie Zirkoniumoxid (ZrO₂), ZrSiO₄ oder dergleichen der Masse zugemischt werden, wobei deren Anteil üblicherweise jedoch 5,0. Gew.-%, bezogen auf den Feststoffanteil der Masse, in Summe nicht überschreiten sollte.

Als Dispergiermittel können solche Zusatzstoffe Anwendung finden, die in Hinblick auf die Kohlenstoffteilchen einen guten Dispergiereffekt bewirken. Hierzu gehören beispielsweise Polymerverbindungen in Form von Polyacrylaten, Polycarbonsäuren, Polyvinylen, Polyvinylsäuren, Polyalkoholen oder dergleichen.

Die reaktive Kieselsäure kann in trockener oder flüssiger Form eingebracht werden. Nach einer Ausführungsform liegt die reaktive Kieselsäure in Form von sogenannter Mikrosilika oder als Kieselsäuregel beziehungsweise Kieselsol vor.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispiels näher beschrieben.

Ausgehend von einem feuerfesten Matrixmaterial auf Basis Sintermagnesit wird nach Zugabe von 7 Gew.-% Graphit (kleiner 500 µm) 0,5 Gew.-% Polyacrylsäure und 3,0 Gew.-% Mikrosilika sowie 6 Gew.-% Wasser eine Gießmasse durch homogenes Vermischen der Komponenten hergestellt.

Die Gießmasse wird zwischen das feuerfeste Dauerfutter einer Gießpfanne und eine mit Abstand davor angeordnete Schablone eingeführt und mittels Vibrationstechnik verdichtet.

Die danach bestimmte Rohdichte, offene Porosität, Kaltbiegefestigkeit (KBF) und Kaltdruckfestigkeit (KDF) bei 180° C, 1000° C und 1500° C (unter reduzierenden Bedingungen) sind in der nachfolgenden Tabelle angegeben:

| | | |
|---|---|---|
| Nach 180° C | Rohdichte (g/cm³) | 2,70 |
| | offene Porosität (Vol%) | 11,0 |
| | KBF (N/mm²) | 17,0 |
| | KDF (N/mm²) | 70 |
| nach 1000° C | Rohdichte (g/cm³) | 2,73 |
| | offene Porosität (Vol-%) | 12,2 |
| | KBF (N/mm²) | 12,8 |
| | KDF (N/mm²) | 69 |
| nach 1500° C | Rohdichte (g/cm³) | 2,75 |
| | offene Porosität (Vol.-%) | 10,2 |
| | KBF (N/mm²) | 11,5 |
| | KDF (N/mm²) | 51,0 |

Die beschriebene Masse kann, und hierin liegt ein wesentliches Merkmal, auch zur Reparatur (sogenanntes relining) von Feuerfestauskleidungen in metallurgischen Öfen eingesetzt werden. Unter Verwendung der genannten Masse ist es also nicht mehr notwendig, verschlissene Formsteine auszubrechen und neu zuzustellen; vielmehr kann das entsprechende Verschleißfutter mehrfach durch Auftragen einer neuen monolithischen Deckschicht auf die beschriebene Art und Weise repariert (emeuert) werden.

## Patentansprüche

1. Verwendung einer feuerfesten keramischen Gießmasse, deren Anmach wassergehalt 3-7 gw % beträgt, auf Basis eines hydratationsempfindlichen Metalloxids, wie MgO, mit einem Gehalt an Kohlenstoff, der nicht durch gesonderte Aufbereitung mit einer hydrophilen Beschichtung ausgebildet ist, zwischen 3 und 10 Gew.-%, einem Dispergiermittel in einer Menge zwischen 0,1 und 2,0 Gew.-% sowie einer reaktiven Kieselsäure in einer Menge zwischen 1,0 und 10,0 Gew.-%, jeweils bezogen auf den Feststoffanteil der Masse, zur monolithischen Auskleidung beziehungsweise Reparatur, insbesondere von erosionsgefährdeten Zonen eines metallurgischen Schmelzgefäßes.

2. Verwendung nach Anspruch 1 mit der Maßgabe, daß als Kohlenstoffträger Ruß und/oder Graphit eingesetzt wird.

3. Verwendung nach Anspruch 1 oder 2 mit der Maßgabe, daß der Kohlenstoffträger in einer Teilchengröße zwischen 1 bis 500 µm eingesetzt wird.

4. Verwendung nach einem der Ansprüche 1 bis 3 mit der Maßgabe, daß als reaktive Kieselsäure Mikrosilika, Kieselsol und/oder Kieselsäuregel eingesetzt wird.

5. Verwendung nach einem der Ansprüche 1 bis 4 mit der Maßgabe, daß die reaktive Kieselsäure in einer Menge zwischen 2,0 und 6,0 Gew.-% eingesetzt wird.

6. Verwendung nach einem der Ansprüche 1 bis 5 mit der Maßgabe, daß als Dispergiermittel eine Polymerverbindung in Form von Polyacrylaten, Polycarbonsäuren, Polyvinylen, Polyvinylsäuren und/oder Polyalkoholen eingesetzt wird.

7. Verwendung nach einem der Ansprüche 1 bis 6 mit der Maßgabe, daß als hydratationsempfindliches Metalloxid Sinter- und/oder Schmelzmagnesia eingesetzt wird.

8. Verwendung nach einem der Ansprüche 1 bis 7 mit der Maßgabe, daß das hydratationsempfindliche Metalloxid in einer Kornfraktion bis 6 mm eingesetzt wird.

9. Verwendung nach einem der Ansprüche 1 bis 8 mit der Maßgabe, daß der Gießmasse weitere Zusätze in Form von calcinierter Tonerde, Siliciumcarbid, Metallen, insbesondere Silicium, weitere feuerfeste Oxide wie ZrO₂ und/oder ZrSiO₄ in einer Gesamtmenge kleiner 5,0 Gew.-%, bezogen auf den Feststoffanteil der Masse, zugegeben werden.

## Claims

1. Use of a refractory ceramic casting material having a mixing water demand of 3-7 % by wt. on the basis of a metal oxide being susceptible to hydration, such as MgO, presenting a carbon content of 3 to 10, % by wt., which carbon is not equipped with a layer provided in a separate preparation act, a dispersing agent in an amount of 0.1 to 2.0 % by wt. and a reactive silicic acid in an amount of 1.0 to 10.0 % by wt., each on the basis of the solids content of the material, for monolithicly lining or repairing a metallurgical melting vessel particularly its zones beingertdangered by erosion.

2. The use according to claim 1, wherein carbon black and/or graphite is used as the carbon carrier.

3. The use according to claim 1 or 2, wherein the carbon carrier is used with a particle size of 1 to 500 µm.

4. The use according to any of claims 1 to 3 with the proviso that micro silica, silica sol and/or silica gel is used as the reactive silicic acid.

5. The use according to any of claims 1 to 4 with the proviso that the reactive silicic acid is used in an amount of 2.0 to 6.0 % by wt.

6. The use according to any of claims 1 to 5 with the proviso that a polymeric compound in the form of polyacrylates, polycarboxylic acids, polyvinylic compounds, polyvinylic acids and/or polyalcohols is used as dispersing agent.

7. The.use according to any of claims 1 to 6 with the proviso that sintered and/or fused magnesia is used as a metal oxide being susceptible to hydration.

8. The use according to any of claims 1 to 7 with the proviso that the metal oxide being susceptible to hydration is used in a grain size fraction up to 6 mm.

9. The use according to any of claims 1 to 8 with the proviso that other additives in the form of calcined alumina, silicon carbide, metals, especially silicium, other refractory oxides such as ZrO₂ and/or ZrSiO₄ are added to the casting material in a total amount of less than 5.0 % by wt. on the basis of the solids content of the material.

## Revendications

1. Utilisation d'une, masse coulée céramique réfractaire avec une teneur en eau à gâcher entre 3 et 7 % en poids, à base d'un oxyde métallique sensible à l'hydratation, comme le MgO, avec une teneur en carbone, qui n'est pas préparé avec un couchage hydrophile formé par préparation séparée comprise entre 3 et 10 % en poids, avec un agent dispersant dans une quantité comprise entre 0,1 et 2,0 % en poids ainsi qu'avec un acide silicique réactif dans une quantité comprise entre 1,0 et 10,0 % en poids, chaque fois en fonction dé la teneur en matières solides de la masse, pour le revêtement monolithique ou éventuellement pour la réparation, en particulier de zones menacées par l'érosion d'un réservoir de fusion métallurgique.

2. Utilisation selon la revendication 1 **caractérisée en ce que** la suie et/ou le graphite est utilisé comme support de carbone.

3. Utilisation selon la revendication 1 ou 2 **caractérisée en ce que** le support de carbone est utilisé dans une taille de particule comprise entre 1 et 500 µm.

4. Utilisation selon une des revendications 1 à 3 **caractérisée en ce que** la microsilice, le sol silicique et/ou le gel de silice sont utilisés comme acide silicique réactif.

5. Utilisation selon une des revendications 1 à 4 **caractérisée en ce que** l'acide silicique réactif est utilisé dans une quantité comprise entre 2,0 et 6,0 % en poids.

6. Utilisation selon une des revendications 1 à 5 **caractérisée en ce qu'**un composé de polymère sous forme, de polyacrylates, d'acides polycarboxyliques, de polyvinyles, d'acides polyvinyliques et/ou de polyalcools sont utilisés comme agent dispersant.

7. Utilisation selon une des revendications 1 à 6 **caractérisée en ce que** la magnésie frittée et/ou fondue est utilisée comme oxyde métallique sensible à l'hydratation.

8. Utilisation selon une des revendications 1 à 7 **caractérisée en ce que** l'oxyde métallique sensible à l'hydratation est utilisée dans une fraction de grain jusqu' à 6 mm.

9. Utilisation selon une des revendications 1 à 8 **caractérisée en ce que** las masse coulée est complétée par d'autres additifs sous forme d'alumine calcinée, de carbure de silicium, de métaux, notamment de silicium, d'autres oxydes réfractaires comme le ZrO₂ et/ou ZrSiO₄ dans une quantité globale inférieure à 5,0 % en poids en fonction à la teneur en matières solides de la masse.
